# FASCICULE DE BREVET EUROPEEN

(11) **EP 1 072 502 B1**
(45) Date de publication et mention de la délivrance du brevet: **18.06.2003**
(21) Numéro de dépôt: 00402132.5
(22) Date de dépôt: 25.07.2000
(51) Int. Cl.: B62D 29/04

(54) **Fixation glissante fusible d'une pièce en matière plastique sur un support**
Abscherbare Gleitbefestigung für ein Kunststoffteil auf einem Tragelement
Shearable gliding fastening for a plastic element on a support

(30) Priorité: 27.07.1999 FR 9909725
(43) Date de publication de la demande: 31.01.2001
(73) Titulaire: COMPAGNIE PLASTIC OMNIUM, 69007 Lyon (FR)
(72) Inventeur: Cornet, Olivier, 01000 Bourg en Bresse (FR); Gustin, Pascal, 01100 Oyonnax (FR)
(74) Mandataire: Tanty, François

(56) Documents cités:
- FR-A- 2 768 197
- FR-A- 2 772 441
- US-A- 5 098 765

## Description

La présente invention concerne une fixation permettant d'assujettir de façon glissante une pièce en matière plastique à un support, ladite pièce pouvant néanmoins se détacher du support en cas de sollicitation importante.

On sait que la dilatation des pièces de carrosserie en matière plastique pose des problèmes tant lors de la fabrication des véhicules, du fait des opérations de peinture et de cataphorèse, que lors de leur utilisation ultérieure, en raison du post-retrait des pièces et des températures qu'elles peuvent atteindre au cours de la vie du véhicule.

Pour résoudre ces problèmes, on utilise des fixations rapportées qui permettent le glissement relatif d'une pièce de carrosserie par rapport à la structure du véhicule. De telles fixations sont désignées "fixations glissantes".

La demande de brevet français n° 96 04317, publiée sous le n° 2 747 091, montre les caractéristiques du préambule de la revendication 1 et décrit une telle fixation glissante.

Il se pose néanmoins un autre problème avec les fixations des pièces en matière plastique, notamment s'il s'agit de pièces de carrosserie de véhicules automobiles.

En effet, outre leur propension à se dilater différemment de leur support, ces pièces sont cassables à partir d'un certain niveau de sollicitation, de sorte que leur utilisation comme pièces de carrosserie, plutôt intéressante pour des chocs à faible vitesse car l'élasticité de la matière plastique leur permet de supporter de petites déformations sans subir de dommage, peut poser des problèmes à la fois en termes de coût de réparation et en termes de sécurité pour des chocs à haute énergie car une pièce en matière plastique cassée peut constituer un objet coupant particulièrement dangereux.

La présente invention vise à proposer une nouvelle fixation glissante qui présente les avantages traditionnels d'une telle fixation, voire d'autres qui seront expliqués ultérieurement, et qui élimine les inconvénients précités liés aux fortes sollicitations que peuvent subir des pièces en matière plastique ainsi fixées, de façon à réduire notamment le coût de la réparation après un choc à 15 km/h.

La présente invention a pour objet une fixation glissante d'une pièce en matière plastique comportant au moins une paroi mince, destinée à être fixée de façon glissante à un support par sa paroi mince, et comportant, dans cette paroi mince, une ouverture allongée ayant deux bords longitudinaux sensiblement parallèles au moins sur une partie de leur longueur, la fixation comprenant une entretoise séparée de la pièce, d'épaisseur supérieure à celle de la paroi mince et apte à coulisser à l'intérieur de l'ouverture entre les deux bords longitudinaux de celle-ci, un couvercle recouvrant complètement l'entretoise, plus large que l'ouverture, de manière à ne pas pouvoir la traverser, pour maintenir la paroi mince dans l'épaisseur de l'entretoise, et une embase destinée à être assujettie au support, la fixation étant caractérisée par le fait que l'entretoise et l'embase sont réunies par des liens fusibles.

Selon l'invention, on entend par paroi mince, une partie de la pièce qui présente une dimension très petite par rapport à ses deux autres dimensions.

La fixation glissante selon l'invention se monte de préférence sur la pièce à fixer, laquelle peut ainsi être manipulée avec la fixation préembarquée pour sa fixation sur le véhicule.

Les liens fusibles de la fixation permettent à cette dernière de libérer la pièce en matière plastique lorsqu'elle subit une importante sollicitation, par exemple lors d'un accident s'il s'agit d'un véhicule automobile.

On préserve ainsi la pièce de carrosserie, qui se détache du véhicule au lieu de se casser, ce qui permet de réaliser une économie en termes de réparation du véhicule, et protège les personnes impliquées dans l'accident d'un risque de coupure avec l'objet tranchant que pourrait constituer la pièce de carrosserie cassée. Ceci s'applique notamment aux ailes en matière plastique des véhicules automobiles.

Dans un mode de réalisation particulier de l'invention, l'entretoise et l'embase sont réunies l'une à l'autre par des liens non seulement fusibles, mais amovibles.

Cette caractéristique présente deux avantages.

Le premier réside dans le fait que la fabrication par moulage de matière plastique de l'entretoise et de l'embase est facilitée, notamment en ce qui concerne les liens fusibles dont le calibrage précis serait délicat si l'entretoise et l'embase étaient moulées d'un seul tenant.

Le second avantage tient au montage de la fixation sur la paroi mince de la pièce. Grâce aux liens amovibles, il est possible de présenter l'entretoise et l'embase de part et d'autre de cette paroi mince et de les assembler par les liens amovibles en emprisonnant la paroi mince dans l'épaisseur de l'entretoise.

Dans une variante de réalisation particulière, les liens amovibles sont constitués par des pions qui s'engagent dans des ouvertures oblongues et s'y ancrent par déplacement relatif entre l'entretoise et l'embase.

Les pions peuvent se trouver sur l'entretoise et les ouvertures oblongues sur l'embase ou inversement.

Le déplacement relatif entre l'entretoise et l'embase est de préférence un mouvement de rotation autour d'un axe central de la fixation, perpendiculaire au plan de la paroi mince.

Dans une variante de réalisation particulière, l'immobilisation de l'entretoise et de l'embase l'une par rapport à l'autre s'effectue grâce à un encliquetage de formes complémentaires, comme par exemple un bossage de l'embase dans un creux de l'entretoise, ou inversement.

De préférence, les surfaces de l'entretoise et de l'embase en appui sur le support sont suffisamment importantes pour empêcher tout fluage de la fixation, y compris lors des montées en température de celle-ci.

On choisira ces surfaces en fonction des conditions souhaitées et du matériau utilisé.

Le choix de surfaces d'appui convenables permet notamment d'éviter le recours à une rondelle anti-desserrage que l'on utilise habituellement pour assurer le maintien du serrage des vis dans le cas où l'entretoise est assujettie au support à l'aide d'une vis.

Dans un mode de réalisation particulier, l'embase comporte des languettes pour maintenir la paroi mince dans l'épaisseur de l'entretoise, entre l'embase et le couvercle.

Dans les modes de réalisation dans lesquels les liens entre l'entretoise et l'embase sont inamovibles, l'un des bords longitudinaux de l'ouverture comporte une ou plusieurs encoches dont la forme correspond à celle de la ou des languettes de l'embase, permettant la mise en place de l'entretoise dans l'ouverture. De plus, on peut prévoir des languettes dissymétriques de chaque côté de l'embase, de manière que les encoches de l'ouverture ne permettent l'introduction de l'entretoise que dans une seule orientation dans le cas où l'entretoise devrait respecter une orientation particulière.

Dans un mode de réalisation particulier de l'invention, l'entretoise comporte une partie élastiquement déformable venant en appui glissant contre la paroi mince de la pièce lorsque l'entretoise coulisse à l'intérieur de l'ouverture, la paroi mince comportant une forme d'accouplement agencée de telle sorte que, dans une position privilégiée de l'entretoise par rapport à l'ouverture, la partie déformable de l'entretoise s'accouple avec la paroi mince.

En d'autres termes, au cours du coulissement de l'entretoise dans l'ouverture, la partie élastiquement déformable s'encliquette dans la forme d'accouplement de la paroi mince, ce qui définit, dans la course de l'entretoise, un point dur correspondant à la position privilégiée de l'entretoise par rapport à l'ouverture.

Cette position privilégiée est définie comme étant une position de prépositionnement de l'entretoise sur la pièce, afin de faciliter le montage de ladite pièce sur son support.

Par exemple, pour une pièce de carrosserie de véhicule automobile, la position privilégiée de l'entretoise par rapport à l'ouverture est telle que l'entretoise peut se déplacer à l'intérieur de l'ouverture dans une première direction pour compenser le post-retrait de la matière thermoplastique et dans une seconde direction, opposée à la première, pour compenser les dilatations différentielles entre la pièce en matière thermoplastique et la structure du véhicule.

Les différences de dilatation étant prépondérantes, la course offerte à l'entretoise dans l'ouverture dans la seconde direction est de préférence supérieure à celle offerte dans la première direction.

Dans le cas où l'un des bords longitudinaux de l'ouverture comporte une ou plusieurs encoches pour la mise en place de l'entretoise munie de languettes dans l'ouverture, la position de mise en place de l'entretoise dans l'ouverture est de préférence éloignée de sa position privilégiée.

Dans une variante préférée de ce mode de réalisation, la partie élastiquement déformable de l'entretoise est constituée par une patte élastique munie d'un bourrelet extérieur qui prend appui contre l'un des bords longitudinaux de l'ouverture, le bord longitudinal considéré comportant, en tant que forme d'accouplement, une rainure dans laquelle le bourrelet de la patte élastique s'engage lorsque l'entretoise occupe sa position privilégiée par rapport à l'ouverture.

Dans un mode de réalisation préféré de l'invention, la partie élastiquement déformable de l'entretoise, par exemple la patte élastique munie d'un bourrelet, est issue de moulage directement avec l'entretoise.

Dans le but de mieux faire comprendre l'invention, on va en décrire maintenant un mode de réalisation donné à titre d'exemple non limitatif, en référence au dessin annexé dans lequel :

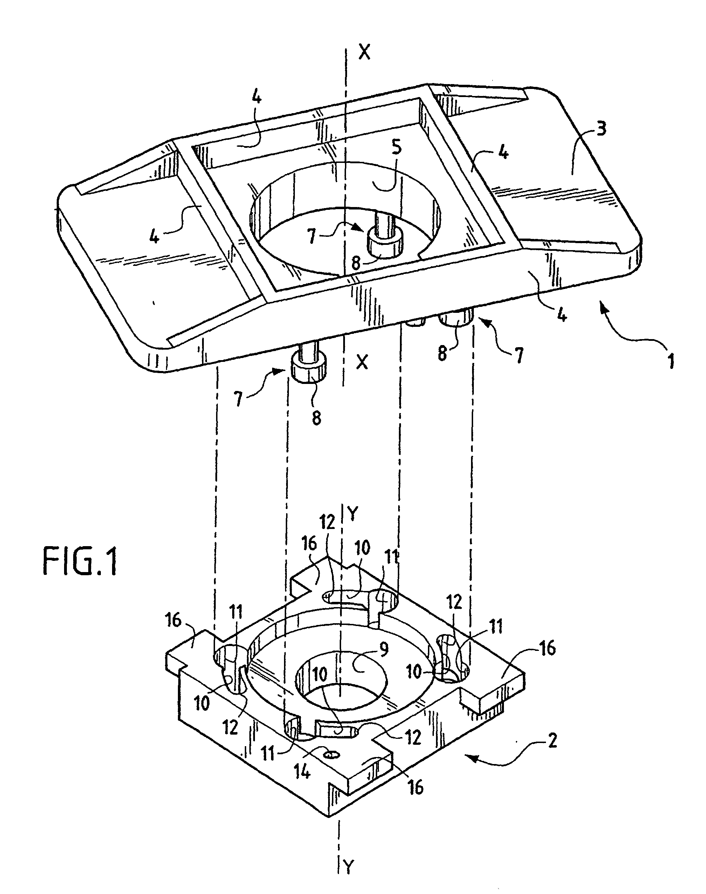

- la figure 1 est une vue en perspective de dessus d'une fixation en deux parties selon un mode de réalisation de l'invention,
- la figure 2 est une vue de dessous analogue à la figure 1,
- la figure 3 est une vue de dessus de la fixation avant assemblage de l'entretoise et de la tête,
- la figure 4 est une vue analogue à la figure 3 après assemblage,
- la figure 5 est une vue en perspective de la fixation assemblée,
- la figure 6 est une vue en perspective de la fixation assemblée juste avant sa mise en place sur une pièce à fixer,
- la figure 7 est une vue analogue à la figure 1 montrant une vis et une rondelle de fixation,
- la figure 8 est une section selon VIII-VIII de la figure 4.

La fixation représentée sur le dessin comprend deux parties 1,2, dont la première 1 forme un couvercle et une entretoise et dont la seconde 2 forme une embase.

Le couvercle est une plaque rectangulaire 3 munie de nervures de renforts 4 sur sa face supérieure et traversée dans son épaisseur par un passage cylindrique central 5 de grand diamètre, d'axe X-X.

L'entretoise 6 est un parallélépipède carré qui est centré en saillie de la face inférieure du couvercle 3. Il est également traversé par l'ouverture cylindrique 5 de grand diamètre.

Quatre pions 7 sont régulièrement répartis autour de cette ouverture et s'étendent depuis l'entretoise 6 en direction opposée au couvercle 3. Chaque pion se termine par une tête cylindrique élargie 8.

L'embase 2 est un parallélépipède carré de même section transversale que l'entretoise, traversé par une ouverture centrale cylindrique 9 de petit diamètre d'axe Y - Y. Lorsque l'embase 2 est mise en place contre l'entretoise 6, l'ouverture 9 de petit diamètre de l'embase et l'ouverture 5 de grand diamètre de l'entretoise sont coaxiales.

L'épaisseur totale de l'embase 2 est sensiblement égale à la hauteur des pions 7, tête 8 comprise.

L'embase 2 comporte quatre ouvertures oblongues 10, destinées chacune à recevoir un pion 7 de l'entretoise, ces ouvertures étant positionnées dans les quatre angles de la grande face de l'embase.

Chaque ouverture oblongue 10 comporte une première extrémité 11 formant un passage traversant cylindrique dont le diamètre est légèrement supérieur au diamètre de la tête 8 du pion 7. L'ouverture se prolonge jusqu'à une seconde extrémité 12 suivant un arc centré sur l'axe Y-Y et selon le profil du pion, c'est-à-dire que du côté de l'embase dirigé vers l'entretoise, sur une épaisseur correspondant à la hauteur du pion comprise entre sa tête 8 et l'entretoise 6, l'ouverture oblongue a une largeur légèrement supérieure au diamètre du pion et du côté opposé à l'entretoise, sur une épaisseur correspondant à la hauteur de la tête, la largeur de l'ouverture oblongue est légèrement supérieure au diamètre de la tête du pion.

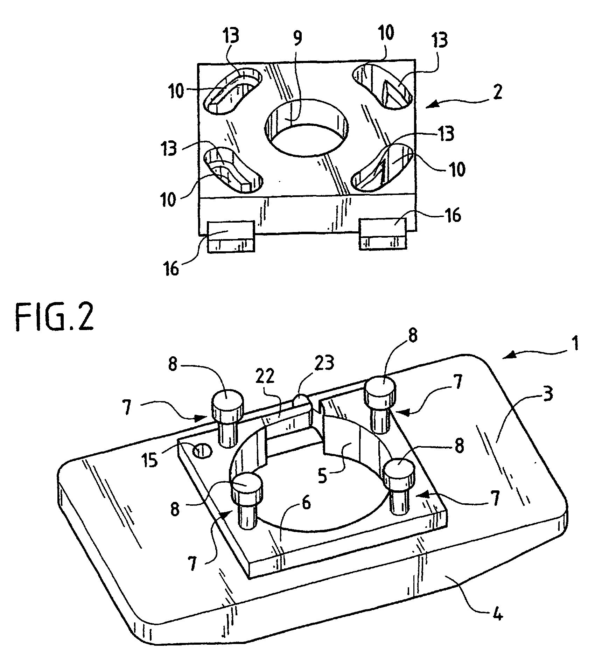

Ainsi, chaque ouverture oblongue présente un épaulement 13 en dehors de sa première extrémité, comme visible à la figure 2.

La position des pions 7 sur l'entretoise est choisie de manière que lorsque l'embase se situe dans l'alignement de l'entretoise, chaque pion 7 se trouve en regard de la seconde extrémité 12 d'une ouverture oblongue 10.

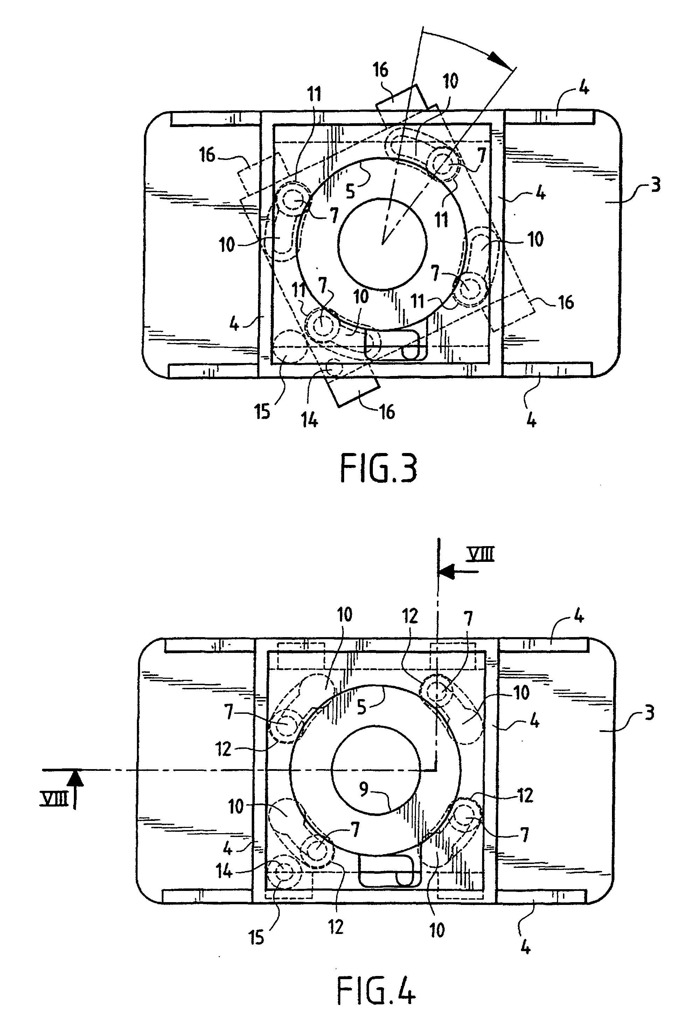

On comprend que l'assemblage des deux parties de la fixation s'effectue en présentant l'embase avec un décalage angulaire en regard de l'entretoise, comme représenté à la figure 3, de telle sorte que les pions 7 se situent au droit des premières extrémités 11 des ouvertures oblongues 10.

Les têtes 8 des pions 7 sont ainsi introduites dans les ouvertures oblongues 10 et viennent à effleurement de la face de l'embase opposée à l'entretoise, l'embase venant ainsi au contact de l'entretoise.

Par une rotation d'un angle correspondant aux ouvertures oblongues, on fait pivoter l'embase sur l'entretoise pour l'amener dans la position de la figure 4, dans laquelle elle se situe dans le prolongement de l'entretoise, chaque pion 7 étant calé dans la seconde extrémité 12 de chaque ouverture oblongue 10.

- Grâce à un bossage sphérique 14 en saillie de l'embase 2 et à un orifice 15 traversant l'entretoise, situé en regard dudit bossage lorsque l'embase et l'entretoise sont en position d'assemblage, on réalise l'encliquetage des deux pièces l'une par rapport à l'autre, ce qui immobilise l'embase sur l'entretoise.

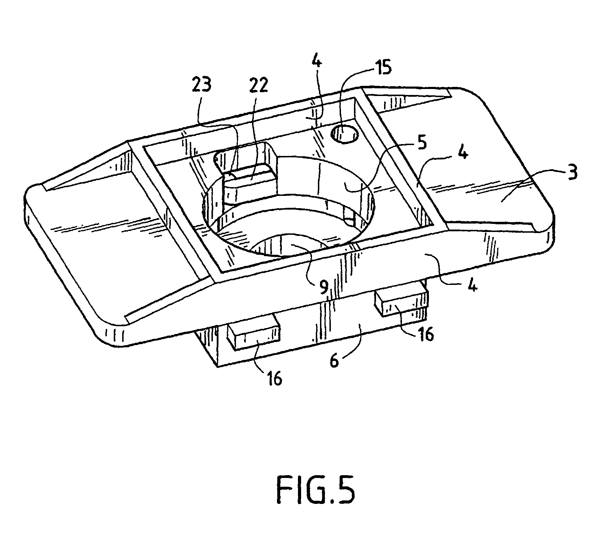

On obtient ainsi la fixation assemblée représentée à la figure 5.

L'embase comporte en outre des languettes latérales 16 qui, lorsque l'embase est assemblée à l'entretoise, se trouvent du côté des bords longitudinaux du couvercle 3 et se trouvent à affleurement avec la face de l'entretoise opposée au couvercle, de sorte qu'entre ledit couvercle 3 et lesdites languettes 16, il subsiste un espace dont l'épaisseur correspond à celle de l'entretoise 6.

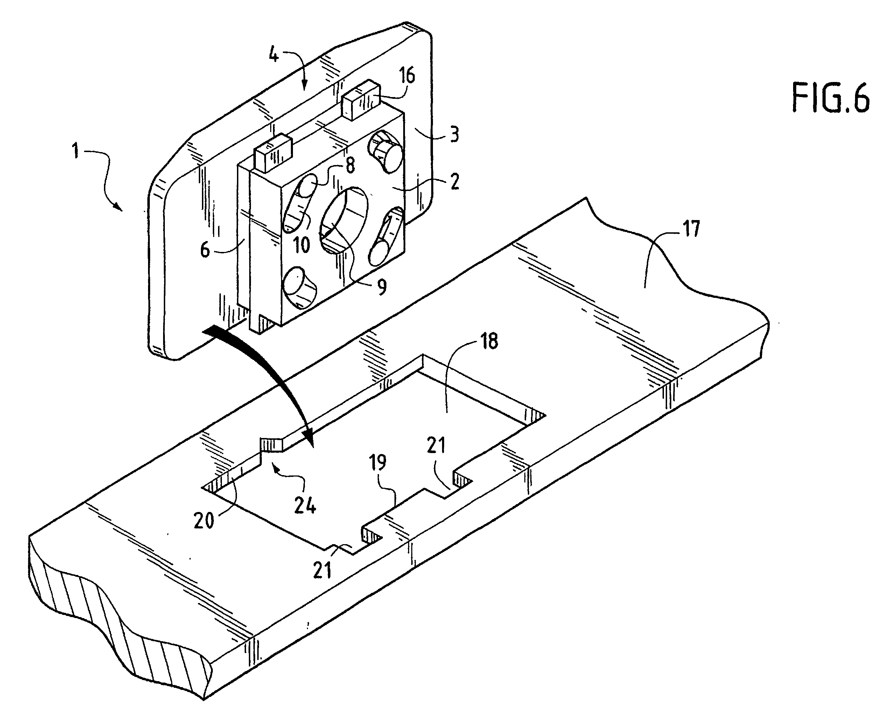

De telles languettes 16 sont destinées à emprisonner la paroi mince 17 d'une pièce en matière plastique (représentée à la figure 6) dans l'épaisseur de l'entretoise 6, entre le couvercle 3 et lesdites languettes 16.

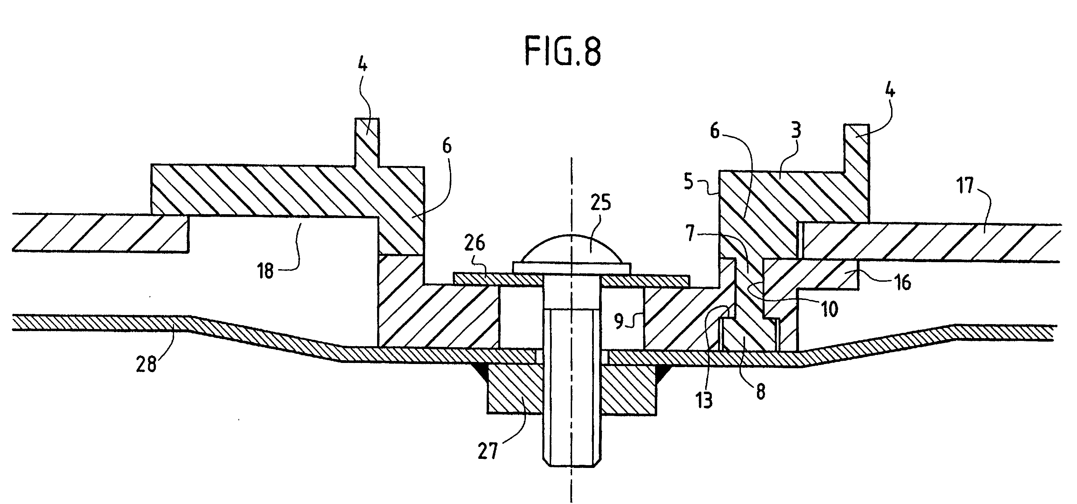

Comme on le voit aux figures 6 et 8, la paroi mince 17 de la pièce à fixer est munie d'une ouverture allongée 18 de forme rectangulaire délimitée par deux bords longitudinaux 19,20 sensiblement parallèles.

L'un 19 de ces deux bords longitudinaux présente deux encoches 21 correspondant à deux des languettes 16 de la fixation.

On installe la fixation sur la paroi mince 17 en la présentant dans la position représentée à la figure 6, en engageant le bord 20 dépourvu d'encoches de l'ouverture 18 entre le couvercle 3 et les deux languettes 16 de la fixation, puis en faisant pivoter la fixation autour de ce bord 20 comme indiqué par la flèche sur la figure 6, pour amener les deux autres languettes 16 dans les encoches 21 du bord 19 opposé.

Les languettes 16 passent ainsi en dessous de la paroi mince 17 et la fixation peut être coulissée pour prendre place dans l'ouverture.

Comme on le voit notamment aux figures 2 et 5, l'entretoise comporte en outre une patte élastique 22 munie d'un bourrelet 23 qui est issu directement de moulage avec l'entretoise 6 et le couvercle 3.

Cette patte élastique 22 prend appui contre le bord 20 dépourvu d'encoche de l'ouverture 18.

Une rainure 24 est réalisée dans l'épaisseur de ce bord 20 dépourvu d'encoche.

On comprend que lorsque la fixation coulisse dans l'ouverture, le bourrelet 23 de la patte élastique, qui s'appuie contre le bord 20 de l'ouverture, finit par rencontrer la rainure 24 et immobilise la fixation par encliquetage dans l'ouverture.

La patte élastique assure ainsi le prépositionnement de la fixation par rapport à la pièce à fixer, l'encliquetage du bourrelet dans la rainure pouvant néanmoins facilement céder pour permettre à la fixation de jouer son rôle de fixation glissante.

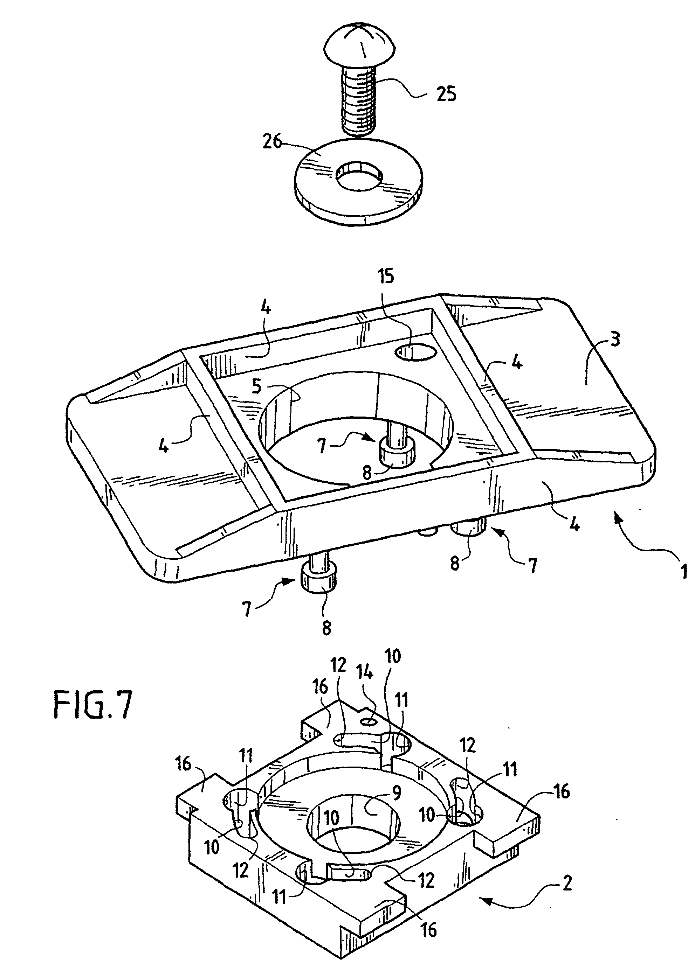

Comme on le voit aux figures 7 et 8, l'assujettissement de la fixation à un support s'effectue grâce à une vis 25 et une rondelle 26. La rondelle présente un diamètre externe inférieur au diamètre de l'ouverture cylindrique 5 du couvercle et de l'entretoise mais supérieur à l'ouverture cylindrique 9 de l'embase, de sorte que lorsque la vis 25 est serrée dans un écrou 27 solidaire du support 28, elle applique la rondelle contre l'embase et l'embase contre le support.

En d'autres termes, l'assujettissement de la fixation sur le support n'est assuré que par l'embase. L'entretoise et le couvercle ne sont retenus que par les pions 7.

Ces pions qui relient l'embase à l'entretoise sont calibrés de manière à se sectionner si l'entretoise subit une importante force de cisaillement par rapport à l'embase, c'est-à-dire une force sensiblement parallèle à la paroi mince de la pièce à fixer.

Il en va de même en cas d'arrachement de la pièce, la force mise en jeu étant alors perpendiculaire à la paroi mince et dirigée à l'opposé du support.

Par conséquent, si la pièce à fixer subit un choc tendant à la déplacer par rapport au support, les pions se sectionnent et la fixation libère la pièce.

Il est bien entendu que le mode de réalisation qui vient d'être décrit ne présente aucun caractère limitatif et qu'il pourra recevoir toutes modifications désirables sans sortir pour cela du cadre de l'invention comme défini dans les revendications.

Le principe de fixation de l'embase par vissage peut notamment être remplacé par un encliquetage. A cet effet, des clips peuvent être issus de moulage avec l'embase, le support étant aménagé en conséquence pour les recevoir.

## Revendications

1. Fixation glissante d'une pièce en matière plastique comportant au moins une paroi mince (17), destinée à être fixée de façon glissante à un support (28) par sa paroi mince (17), et comportant, dans cette paroi mince, une ouverture allongée (18) ayant deux bords longitudinaux (19, 20) sensiblement parallèles au moins sur une partie de leur longueur, la fixation comprenant une entretoise (6) séparée de la pièce, d'épaisseur supérieure à celle de la paroi mince (17) et apte à coulisser à l'intérieur de l'ouverture (18) entre les deux bords longitudinaux (19, 20) de celle-ci, un couvercle (3) recouvrant complètement l'entretoise (6), plus large que l'ouverture (18), de manière à ne pas pouvoir la traverser, pour maintenir la paroi mince (17) dans l'épaisseur de l'entretoise (6), et une embase (2) destinée à être assujettie au support (28), la fixation étant **caractérisée par le fait que** l'entretoise (6) et l'embase (2) sont réunies par des liens fusibles (7).

2. Fixation selon la revendication 1, **caractérisée par le fait que** les liens fusibles sont également amovibles.

3. Fixation selon la revendication 2, **caractérisée par le fait que** les liens fusibles et amovibles sont constitués par des pions (7) qui s'engagent dans des ouvertures oblongues (10) et s'y ancrent par déplacement relatif entre l'entretoise (6) et l'embase (2).

4. Fixation selon la revendication 3, **caractérisée par le fait que** le déplacement relatif entre l'entretoise (6) et l'embase (2) est un mouvement de rotation autour d'un axe central de la fixation.

5. Fixation selon l'une quelconque des revendications 2 à 4, **caractérisée par le fait que** l'entretoise (6) et l'embase (2) s'immobilisent l'une par rapport à l'autre par encliquetage.

6. Fixation selon l'une quelconque des revendications 1 à 5, **caractérisée par le fait que** l'embase (2) comporte des languettes (16) pour maintenir la paroi mince (17) dans l'épaisseur de l'entretoise (6), entre l'embase (2) et le couvercle (3).

7. Fixation selon l'une quelconque des revendications 1 à 6, **caractérisée par le fait que** l'entretoise (6) comporte une partie élastiquement déformable (22) venant en appui glissant contre la paroi mince (17) de la pièce lorsque l'entretoise (6) coulisse à l'intérieur de l'ouverture (18), la paroi mince (17) comportant une forme d'accouplement (24) agencée de telle sorte que, dans une position privilégiée de l'entretoise par rapport à l'ouverture, la partie déformable (22) de l'entretoise s'accouple avec la paroi mince.

8. Fixation selon la revendication 7, **caractérisée par le fait que** la partie élastiquement déformable de l'entretoise est constituée par une patte élastique (22) munie d'un bourrelet extérieur (23) qui prend appui contre l'un (20) des bords longitudinaux de l'ouverture (18), le bord longitudinal considéré (20) comportant, en tant que forme d'accouplement, une rainure (24) dans laquelle le bourrelet (23) de la patte élastique (22) s'engage lorsque l'entretoise occupe sa position privilégiée par rapport à l'ouverture.

9. Fixation selon l'une quelconque des revendications 7 et 8, **caractérisée par le fait que** la partie élastiquement déformable (22) de l'entretoise est issue de moulage directement avec l'entretoise (6).

## Patentansprüche

1. Gleitbefestigung eines Kunststoffs, das mindestens eine dünne Wandung (17) aufweist und bestimmt ist, gleitend mittels seiner dünnen Wandung (17) an einem Tragteil (28) befestigt zu werden und das in dieser dünnen Wandung (17) eine längliche Öffnung (18) aufweist, welche zwei Längsränder (19, 20) hat, die im wesentlichen parallel über zumindest einen Teil der Länge der Öffnung sind, dabei weist die Befestigung eine Zwinge (6), die separat vom Kunststoffteil ist, die eine größere Dicke als diejenige der dünnen Wandung (17) hat und die ausgelegt ist für ein Gleiten im Inneren der Öffnung (18) zwischen den beiden Längsrändem (19, 20) der Öffnung, einen Deckel (3), der vollständig die Zwinge (6) überdeckt und größer als die Öffnung (18) ist, in einer Art, dass er diese nicht durchqueren kann, um die dünne Wandung im Bereich der Dicke der Zwinge (6) zu halten, und eine Fußplatte (2) auf, die für eine Befestigung mit dem Tragteil (28) ausgelegt ist, diese Befestigung ist **dadurch gekennzeichnet, dass** die Zwinge (6) und die Fußplatte (2) durch schmelzbare Verbindungsmittel (7) miteinander verbunden sind.

2. Gleitbefestigung nach Anspruch 1, **dadurch gekennzeichnet, dass** die schmelzbaren Verbindungsmittel zudem lösbar sind.

3. Gleitbefestigung nach Anspruch 2, **dadurch gekennzeichnet, dass** die schmelzbaren und lösbaren Befestigungsmittel von Stiften (7) gebildet sind, die in Langlöcher (10) eingreifen und sich durch Relativbewegung zwischen der Zwinge (6) und der Fußplatte (2) darin verankern.

4. Gleitbefestigung nach Anspruch 3, **dadurch gekennzeichnet, dass** die Relativverschiebung zwischen der Zwinge (6) und der Fußplatte (2) eine Rotationsbewegung um eine zentrale Achse der Befestigung ist.

5. Gleitbefestigung nach einem beliebigen der Patentansprüche 2-4, **dadurch gekennzeichnet, dass** die Zwinge (6) und die Fußplatte (2) durch Einklipsen miteinander verbindbar sind.

6. Gleitbefestigung nach einem beliebigen der Patentansprüche 1-5, **dadurch gekennzeichnet, dass** die Fußplatte (2) Zungen (16) aufweist, um die dünne Wandung (17) im Bereich der Dicke der Zwinge (6) zwischen Fußplatte (2) und dem Deckel (3) zu halten.

7. Gleitbefestigung nach einem beliebigen der Patentansprüche 1-6, **dadurch gekennzeichnet, dass** die Zwinge einen elastisch deformierbaren Bereich (22) aufweist, der in Gleitanlage gegen die dünne Wandung (17) des Kunststoffteils gelangt, wenn die Zwinge (6) im Inneren der Öffnung (18) gleitet, dabei weist die dünne Wandung (17) eine Ankopplungsform (24) auf, die derart ausgebildet ist, dass in einer bevorzugten Position der Zwinge in Bezug auf die Öffnung der deformierbare Bereich (22) der Zwinge sich mit der dünnen Wandung verbindet.

8. Gleitbefestigung nach Anspruch 7, **dadurch gekennzeichnet, dass** der elastisch deformierbare Bereich der Zwinge durch einen elastischen Arm (22) gebildet ist, der mit einem äußeren Wulst (23) versehen ist, welcher in Anlage gegen einen Längsrand (20) der Längsränder der Öffnung (18) gelangt, der betrachtete Längsrand (20) weist als Ankopplungsform eine Rinne (24) auf, in die der Wulst (23) des elastischen Arms (22) eingreift, wenn die Zwinge ihre bevorzugte Position in Bezug auf die Öffnung einnimmt.

9. Gleitbefestigung nach einem beliebigen der Patentansprüche 7 und 8, **dadurch gekennzeichnet, dass** der elastisch deformierbare Bereich (22) der Zwinge beim Formvorgang direkt zusammen mit der Zwinge (6) erhalten wird.

## Claims

1. A sliding fastening for a plastics material part having at least one thin wall (17) that is to be slidably fastened to a support (28) via its thin wall (17), the part including in said thin wall an elongate opening (18) having two longitudinal edges (19, 20) that are substantially parallel at least over a portion of their length, the fastening comprising a spacer (6) that is separate from the part, that is thicker than the thickness of the thin wall (17), and that is suitable for sliding in the opening (18) between the two longitudinal edges (19, 20) thereof, a cover (3) completely covering the spacer (6), being larger than the opening (18) so as to be incapable of passing through it in order to hold the thin wall (17) in register with the thickness of the spacer (6), and a base (2) for securing to the support (28), the fastening being **characterized by** the fact that the spacer (6) and the base (2) are united by fusible links (7).

2. A fastening according to claim 1, **characterized by** the fact that the fusible links are also releasable.

3. A fastening according to claim 2, **characterized by** the fact that the fusible and releasable links are constituted by pegs (7) which engage in oblong openings (10) and which are anchored therein by relative displacement between the spacer (6) and the base (2).

4. A fastening according to claim 3, **characterized by** the fact that the relative displacement between the spacer (6) and the base (2) is a pivoting movement about a central axis of the fastening.

5. A fastening according to any one of claims 2 to 4, **characterized by** the fact that the spacer (6) and the base (2) are prevented from moving relative to each other by snap-fastening.

6. A fastening according to any one of claims 1 to 5, **characterized by** the fact that the base (2) has tongues (16) for holding the thin wall (17) in register with the thickness of the spacer (6) between the base (2) and the cover (3).

7. A fastening according to any one of claims 1 to 6, **characterized by** the fact that the spacer (6) has an elastically deformable portion (22) that bears slidably against the thin wall (17) of the part while the spacer (6) is sliding inside the opening (18), the thin wall (17) having a coupling shape (24) organized in such a manner that when the spacer is in a privileged position relative to the opening, the deformable portion (22) of the spacer couples with the thin wall.

8. A fastening according to claim 7, **characterized by** the fact that the elastically deformable portion of the spacer is constituted by a resilient tab (22) provided with an external bulge (23) which bears against one of the longitudinal edges (20) of the opening (18), the longitudinal edge in question (20) having as its coupling shape a groove (24) into which the bulge (23) of the resilient tab (22) engages when the spacer is occupying its privileged position relative to the opening.

9. A fastening according to claim 7 or 8, **characterized by** the fact that said elastically deformable portion (22) of the spacer is directly molded with the spacer (6).
